# EUROPEAN PATENT APPLICATION

(11) **EP 4 296 532 A1**
(43) Date of publication of application: **27.12.2023**
(21) Application number: 22831395.3
(22) Date of filing: 26.04.2022
(51) Int. Cl.: F16D 65/14, F16D 121/04, F16D 125/16, F16D 55/224

(54) **BRAKE CALIPER AND VEHICLE HAVING SAME**

(30) Priority: 28.06.2021 CN 202110718105
(71) Applicant: BYD Company Limited, Shenzhen, Guangdong 518118 (CN)
(72) Inventor: FENG, Weizhi, Shenzhen, Guangdong 518118 (CN); PENG, Xiaoren, Shenzhen, Guangdong 518118 (CN); ZHANG, Xu, Shenzhen, Guangdong 518118 (CN); LI, Chuanbo, Shenzhen, Guangdong 518118 (CN); ZHAO, Feilin, Shenzhen, Guangdong 518118 (CN)
(74) Representative: Arnold & Siedsma
(86) International application number: PCT/CN2022/089140
(87) International publication number: WO 2023/273566

(57) **Abstract**

A brake caliper (1) and a vehicle having the same are provided. The brake caliper (1) includes: a caliper body (100) and an exhaust screw (200). A brake disc groove (110) and a piston cylinder (120) are constructed in the caliper body. A brake-fluid delivery oil line (130) and an exhaust channel (140) are constructed in a wall of the caliper body. The brake-fluid delivery oil line is in communication with the piston cylinder. The exhaust channel is in communication with an end of the brake-fluid delivery oil line in a length direction of the caliper body. An exhaust port (150) is provided on a side of the caliper body in a thickness direction, and the exhaust port is in communication with the exhaust channel. An exhaust screw is mounted on the exhaust port on the side of the caliper body, to control opening or closing of the exhaust port.

## Description

### CROSS-REFERENCE TO RELATED APPLICATIONS

The present disclosure is proposed based on and claims priority to Chinese Patent Application No. 202110718105.0, filed on June 28, 2021, which is incorporated herein by reference in its entirety.

### FIELD

The present disclosure relates to the field of vehicle technologies, and more specifically, to a brake caliper and a vehicle having the same.

### BACKGROUND

A brake caliper in the related art includes a caliper with an external oil line and a caliper with an internal oil line.

For the caliper with an external oil line, because an oil line pipe is arranged on an outer side of the caliper and mounted outside the caliper, and a heat conductivity coefficient of air is lower than a heat conductivity coefficient of metal, this arrangement of an oil line has a poor heat dissipation effect. In addition, because an oil pipe is exposed on the outer side and tends to be impacted, security stability is relatively low.

For the caliper with an internal oil line, an exhaust port and an exhaust screw are generally arranged on each of two sides of a piston cylinder. During exhaustion, a caliper body needs to be inclined, to dispose the exhaust port and the exhaust screw at proper positions. In this way, after the exhaust screw on one side of the caliper body completes exhaustion, the other side still needs to exhaust, and the caliper body needs to be inclined to the other side. An exhaustion operation is complex, and efficiency is not high.

### SUMMARY

The present disclosure is intended to resolve at least one of technical problems existing in the related art. Therefore, an objective of the present disclosure is to provide a brake caliper. The brake caliper has advantages of good heat dissipation effect, high stability, simple exhaustion operation, high exhaust efficiency, and the like.

The present disclosure further provides a vehicle having the brake caliper.

To implement the objective, an embodiment according to a first aspect provides a brake caliper, which includes: a caliper body. A brake disc groove and a piston cylinder are constructed in the caliper body. A brake-fluid delivery oil line and an exhaust channel are constructed in a wall of the caliper body. The brake-fluid delivery oil line is in communication with the piston cylinder. The exhaust channel is in communication with an end of the brake-fluid delivery oil line in a length direction of the caliper body. An exhaust port is provided on a side of the caliper body in a thickness direction, and the exhaust port is in communication with the exhaust channel. The brake caliper further includes an exhaust screw. The exhaust screw is mounted on the exhaust port on the side of the caliper body, to control opening and closing of the exhaust port.

The brake caliper according to this embodiment of the present disclosure has advantages of good heat dissipation effect, high stability, simple exhaustion operation, high exhaust efficiency, and the like.

According to some specific embodiments of the present disclosure, the caliper body includes a first caliper body and a second caliper body. The first caliper body and the second caliper body are fastened to jointly define the brake disc groove. The piston cylinder is formed on the first caliper body and the second caliper body. The brake-fluid delivery oil line is formed on the first caliper body and the second caliper body. The exhaust channel and the exhaust port are formed on the second caliper body. The exhaust screw is mounted on the second caliper body.

Further, the brake-fluid delivery oil line includes a first oil line and a second oil line. The first oil line is formed on the first caliper body. The second oil line is formed on the second caliper body, and is in communication with the first oil line The exhaust channel is in communication with the second oil line.

Further, the first oil line and the second oil line are symmetrically arranged with respective to a joint surface between the first caliper body and the second caliper body.

According to some specific embodiments of the present disclosure, each of the first oil line and the second oil line includes an injection oil line. The injection oil line extends in the length direction of the caliper body and is in communication with a bottom portion of the piston cylinder. Each of the first oil line and the second oil line further includes a first communication oil line. The first communication oil line is located on one side of the piston cylinder in the length direction of the caliper body. The first communication oil line is arranged inclined with respective to the injection oil line. One end of the first communication oil line is in communication with the injection oil line, and an other end of the first communication oil line runs through the joint surface between the first caliper body and the second caliper body. Each of the first oil line and the second oil line further includes a second communication oil line. The second communication oil line is located on an other side of the piston cylinder in the length direction of the caliper body. The second communication oil line is arranged inclined with respective to the injection oil line. One end of the second communication oil line is in communication with the injection oil line, and an other end of the second communication oil line runs through the joint surface between the first caliper body and the second caliper body. The exhaust channel is in communication with the second communication oil line of the second caliper body.

Further, the brake caliper further includes an oil seal plug. Two ends of the injection oil line are open, and a threaded hole is constructed on the injection oil line. The oil seal plug is mounted on the threaded hole.

According to some specific embodiments of the present disclosure, the brake caliper further includes a first seal ring. A first seal groove is constructed on the joint surface between the first caliper body and the second caliper body. The first seal ring is arranged in the first seal groove and surrounds the other end of the first communication oil line. The brake caliper further includes a second seal ring. A second seal groove is constructed on the joint surface between the first caliper body and the second caliper body. The second seal ring is arranged in the second seal groove and surrounds the other end of the second communication oil line.

According to some specific embodiments of the present disclosure, the exhaust channel is arranged parallel to an axial direction of the piston cylinder.

According to some specific embodiments of the present disclosure, the exhaust screw has a first end and a second end. The first end extends into the exhaust port, and the second end is exposed from the exhaust port. A first cone surface, a central exhaust hole, and a vent hole are constructed on the exhaust screw. The first cone surface is formed at the first end of the exhaust screw. The central exhaust hole extends in a length direction of the exhaust screw and runs through the second end of the exhaust screw. The vent hole is located on a side of the first cone surface towards the second end, and is in communication with an outer peripheral wall of the exhaust screw and the central exhaust hole. A second cone surface adapted to match the first cone surface is constructed on a bottom wall of the exhaust port.

An embodiment according to a second aspect of the present disclosure provides a vehicle.

The vehicle according to this embodiment of the present disclosure includes the brake caliper according to the embodiment of the first aspect of the present disclosure.

The vehicle according to this embodiment of the present disclosure uses the brake caliper according to the embodiments of the present disclosure, and has advantages of good heat dissipation effect, high stability, simple exhaustion operation, high exhaust efficiency, and the like.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings.
FIG. 1 is a schematic structural diagram of a brake caliper according to an embodiment of the present disclosure;
FIG. 2 is a front view of a brake caliper according to an embodiment of the present disclosure;
FIG. 3 is a sectional view in an A-A line in FIG. 2;
FIG. 4 is a side view of a brake caliper according to an embodiment of the present disclosure;
FIG. 5 is an enlarged view of a region B in FIG. 3;
FIG. 6 is an enlarged view of a region C in FIG. 3; and
FIG. 7 is an enlarged view of a region D in FIG. 3.

### Reference signs:

brake caliper 1, caliper body 100, brake disc groove 110, piston cylinder 120,
brake-fluid delivery oil line 130, exhaust channel 140, exhaust port 150, first caliper body 101, second caliper body 102,
first oil line 131, second oil line 132, injection oil line 133, first communication oil line 134, second communication oil line 135,
first seal ring 136, first seal groove 137, second seal ring 138, second seal groove 139,
exhaust screw 200, oil seal plug 210, first cone surface 220, central exhaust hole 230, vent hole 240,
second cone surface 151, and sealing sleeve 250.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary and used merely for explaining the present disclosure, and should not be construed as a limitation on the present disclosure.

In the descriptions of the present disclosure, it should be understood that orientation or position relationships indicated by the terms such as "center", "longitudinal", "transverse", "length", "width", "thickness", "above", "below", "front", "rear", "left", "right", "vertical", "horizontal", "top", "bottom", "inside", "outside", "axial", "radial", and "circumferential" are based on orientation or position relationships shown in the accompanying drawings, and are used only for ease and brevity of illustration and descriptions of the present disclosure, rather than indicating or implying that the mentioned apparatus or component needs to have a particular orientation or needs to be constructed and operated in a particular orientation. Therefore, such terms should not be construed as limitation on the present disclosure.

In the descriptions of the present disclosure, "a first feature" and "a second feature" may include one or more features.

In the descriptions of the present disclosure, "a number of" means two or more, and "several" means one or more.

A brake caliper 1 according to an embodiment of the present disclosure is described below with reference to the accompanying drawings.

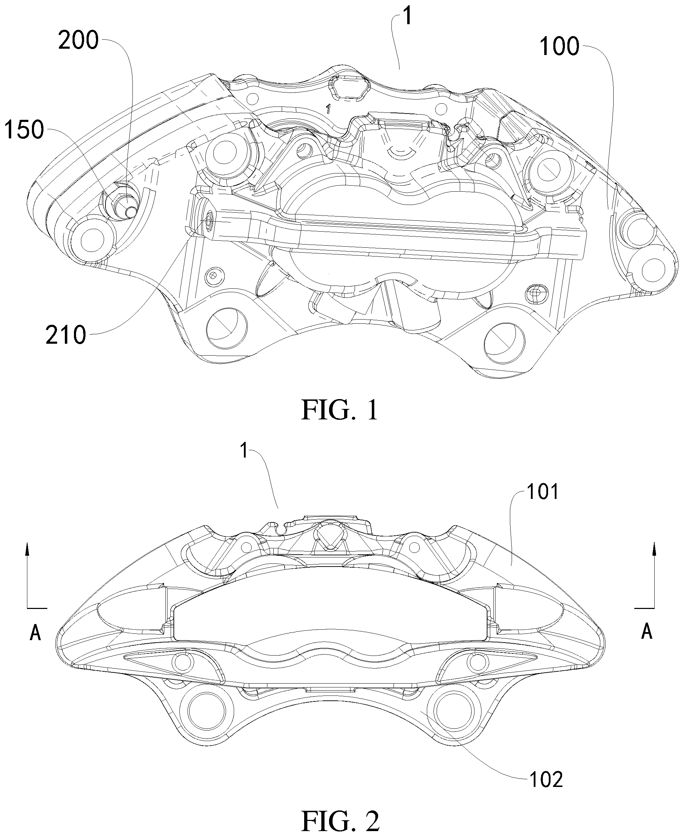

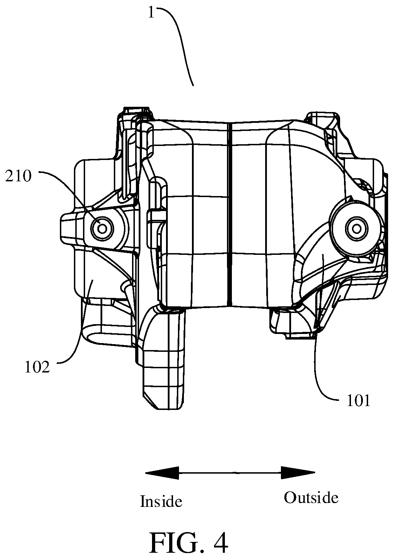

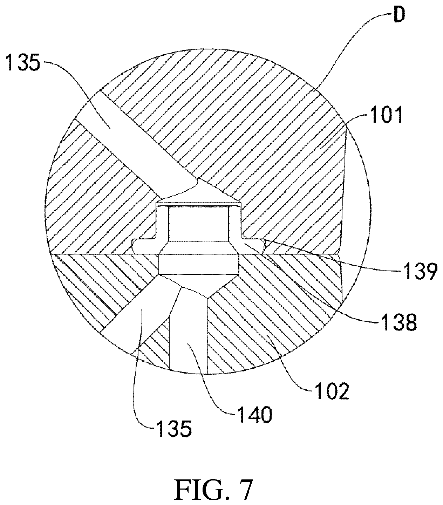

As shown in FIG. 1 to FIG. 7, the brake caliper 1 according to an embodiment of the present disclosure includes a caliper body 100 and an exhaust screw 200.

A brake disc groove 110 and a piston cylinder 120 are constructed in the caliper body 100. A brake-fluid delivery oil line 130 and an exhaust channel 140 are constructed in a wall of the caliper body 100. The brake-fluid delivery oil line 130 is in communication with the piston cylinder 120. The exhaust channel 140 is in communication with an end of the brake-fluid delivery oil line 130 in a length direction of the caliper body 100. An exhaust port 150 is provided on a side of the caliper body 100 in a thickness direction. The exhaust port 150 is in communication with the exhaust channel 140. An exhaust screw 200 is mounted on the exhaust port 150 on the side of the caliper body 100, to control opening and closing of the exhaust port 150.

For example, the brake caliper 1 can be vertically disposed in actual use, that is, the exhaust port 150 is located at an upper end of the caliper body 100, and the exhaust channel 140 is in communication with an upper end of the brake-fluid delivery oil line 130.

Specifically, in use, the brake caliper 1 is vertically disposed, and the exhaust channel 140 is located at a highest point of the brake-fluid delivery oil line 130. Because a density of gas is less than that of liquid, when the liquid is injected in the brake-fluid delivery oil line 130, the gas gathers towards the highest point, and in this case, the exhaust channel 140 is located at the highest point of the brake-fluid delivery oil line 130. Therefore, the gas can be exhausted from the exhaust port 150 well, thereby achieving an objective of exhaustion. During exhaustion, the end of the brake caliper 1 at which the exhaust port 150 may be disposed upward, the brake caliper 1 is vertical and inclined at a specific angle, and the exhaust port 150 is inclined downward. After loosening the exhaust screw 200, fluid in the brake-fluid delivery oil line 130 forms a passage with the outside through the exhaust port 150, and applies pressure to the brake caliper 1. The fluid presses the gas in the brake caliper 1 out through the passage to exhaust, until no bubble is generated from the exhaust port 150. The exhaust screw 200 is tightened, the exhaust port 150 is closed, and the exhaustion is completed.

According to the brake caliper 1 of this embodiment of the present disclosure, the brake-fluid delivery oil line 130 and the exhaust channel 140 are both arranged inside a wall of the brake caliper 1, and therefore problems of poor heat dissipation effect and poor stability of a caliper with an external oil line can be avoided.

In addition, the exhaust port 150 is moved to the side of the thickness direction of the caliper body 100, and the exhaust channel 140 is in communication with the exhaust port 150 and the brake-fluid delivery oil line 130. The exhaust channel 140 is in communication with an end of the brake-fluid delivery oil line 130 in the length direction of the caliper body 100, so that the gas in the brake-fluid delivery oil line 130 can be exhausted from the exhaust port 150 through the exhaust channel 140. Because the exhaust port 150 is located on the side of the caliper body 100 in the thickness direction, the fluid close to an inner side and an outer side of the brake caliper 1 can both be delivered to the brake-fluid delivery oil line 130, and the gas in the fluid is exhausted outside the exhaust port 150 through the exhaust channel 140. In this way, the exhaust port 150 is only needed to be arranged on the side in the thickness direction, reducing a quantity of the exhaust ports 150 and simplifying a structure of the exhaust port 150 of the caliper body 100. In addition, the fluid on the inner side and the outer side of the caliper body 100 can be both jointly exhausted from the exhaust port 150 of a side of a width direction of the caliper body 100, and an other side does not need to exhaust. During exhaustion, exhaustion can be completed only by inclining the brake caliper 1 towards a side, steps of exhaustion are reduced, exhaustion operation is simpler, exhaustion efficiency is higher, and exhaustion effect is good.

Therefore, the brake caliper 1 according to the embodiments of the present disclosure has advantages of good heat dissipation effect, high stability, simple exhaustion operation, high exhaustion efficiency, and the like.

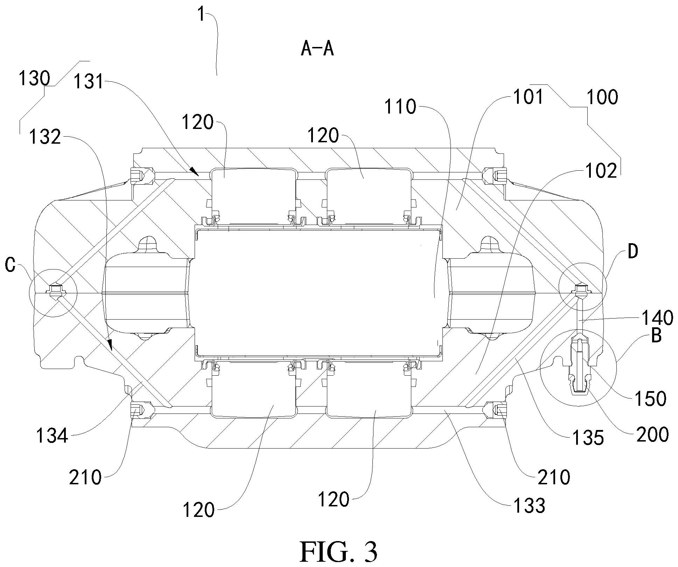

In some specific embodiments of the present disclosure, as shown in FIG. 2 and FIG. 3, the caliper body 100 includes a first caliper body 101 and a second caliper body 102.

The first caliper body 101 and the second caliper body 102 are fastened to jointly define the brake disc groove 110. The piston cylinder 120 is formed on the first caliper body 101 and the second caliper body 102. The brake-fluid delivery oil line 130 is formed on the first caliper body 101 and the second caliper body 102. The exhaust channel 140 and the exhaust port 150 are formed on the second caliper body 102. The exhaust screw 200 is mounted on the second caliper body 102.

For example, the first caliper body 101 is located on one side (for example, an outer side) of the brake disc groove 110 in a width direction, the second caliper body 102 is located on an other side (for example, an inner side) of the brake disc groove 110 in the width direction. When the first caliper body 101 and the second caliper body 102 are fastened, the brake-fluid delivery oil lines 130 of the first caliper body 101 and the second caliper body 102 are in communication. The brake-fluid delivery oil line 130 gathers the fluid in the first caliper body 101 and the second caliper body 102, so that the exhaustion of the fluid in the first caliper body 101 and the second caliper body 102 is more uniform.

Further, as shown in FIG. 3, the brake-fluid delivery oil line 130 includes a first oil line 131 and a second oil line 132.

The first oil line 131 is formed on the first caliper body 101. The second oil line 132 is formed on the second caliper body 102 and is in communication with the first oil line 131. The exhaust channel 140 is in communication with the second oil line 132.

For example, the exhaust channel 140 is connected to an end of the second oil line 132 close to the first oil line 131, so that the exhaust channel 140 is close to both the first oil line 131 and the second oil line 132. The first oil line 131 is in communication with the second oil line 132, so that fluid in the first oil line 131 can flow to the second oil line 132, and gas in the first oil line 131 and the second oil line 132 is jointly exhausted from the exhaust port 150.

Further, as shown in FIG. 3, the first oil line 131 and the second oil line 132 are symmetrically arranged with respective to a joint surface between the first caliper body 101 and the second caliper body 102.

In this way, distribution of the fluid in the first oil line 131 and the second oil line 132 is relatively uniform, and exhaustion on two sides of the caliper body 100 in the width direction is relatively uniform, ensuring full exhaustion of the fluid in the first caliper body 101 and the second caliper body 102.

In some specific embodiments of the present disclosure, as shown in FIG. 3, each of the first oil line 131 and the second oil line 132 includes an injection oil line 133, a first communication oil line 134, and a second communication oil line 135.

The injection oil line 133 extends along the length direction of the caliper body 100 and is in communication with a bottom portion of the piston cylinder 120.

The first communication oil line 134 is located on one side of the piston cylinder 120 in the length direction of the caliper body 100. The first communication oil line 134 is arranged inclined with respective to the injection oil line 133. One end of the first communication oil line 134 is in communication with the injection oil line 133, and an other end of the first communication oil line 134 runs through the joint surface between the first caliper body 101 and the second caliper body 102.

The second communication oil line 135 is located on an other side of the piston cylinder 120 in the length direction of the caliper body 100. The second communication oil line 135 is arranged inclined with respective to the injection oil line 133. One end of the second communication oil line 135 is in communication with the injection oil line 133, and an other end of the second communication oil line 135 runs through the joint surface between the first caliper body 101 and the second caliper body 102. The exhaust channel 140 is in communication with the second communication oil line 135 of the second caliper body 102. That is, the first caliper body 101 is connected to and is in communication with the first communication oil line 134 of the second caliper body 102, and the first caliper body 101 is connected to and is in communication with the second communication oil line 135 of the second caliper body 102. In this way, space inside the wall of the caliper body 100 is fully utilized, so that the first oil line 131 and the second oil line 132 are in communication with each other and are in communication with the piston cylinder 120.

For example, all cross sections of the injection oil line 133, the first communication oil line 134, and the second communication oil line 135 are constructed as a shape of circle, diameters of the first communication oil line 134 and the second communication oil line 135 are equal and are both less than a diameter of the injection oil line 133. The first communication oil line 134 is inclined with respective to the injection oil line 133 at an angle of about 45°±0.5°, and the second communication oil line 135 is inclined with respective to the other end of the injection oil line 133 at an angle of about 45°±0.5°. In this way, the inclined angles between the injection oil line 133 and the first communication oil line 134 and the second communication oil line 135 are proper, and the fluid flows relatively smoothly between the injection oil line 133 and the first communication oil line 134 and between the injection oil line 133 and the second communication oil line 135.

In addition, the first communication oil line 134 of the first oil line 131 is in communication with the first communication oil line 134 of the second oil line 132, and the second communication oil line 135 of the first oil line 131 is in communication with the second communication oil line 135 of the second oil line 132, so that the first oil line 131 and the second oil line 132 are in communication with both sides of the injection oil line 133 to form a circulated fluid flowing path, and the fluid in the first oil line 131 and the second oil line 132 is more uniform.

Further, as shown in FIG. 1, the brake caliper 1 further includes an oil seal plug 210. Two ends of the injection oil line 133 are open and is constructed with a threaded hole. The oil seal plug 210 is mounted on the threaded hole.

For example, the injection oil line 133 may be manufactured into a through hole extending along the length direction of the caliper body 100. The oil seal plug 210 seals the two ends of the injection oil line 133. Manufacturing of the injection oil line 133 is relatively simple, and the oil seal plug 210 seals the fluid inside the caliper body 100, preventing the fluid from flowing outside. The oil seal plug 210 is threadedly connected to the two ends of the injection oil line 133, and the two ends of the injection oil line 133 makes assembly and disassmbly of the oil seal plug 210 more convenient by constructing the threaded hole.

In some specific embodiments of the present disclosure, as shown in FIG. 3, FIG. 6, and FIG. 7. The brake caliper 1 further includes a first seal ring 136 and a second seal ring 138.

A first seal groove 137 is constructed on the joint surface between the first caliper body 101 and the second caliper body 102. The first seal ring 136 is arranged in the first seal groove 137 and surrounds the other end of the first communication oil line 134. A second seal groove 139 is constructed on the joint surface between the first caliper body 101 and the second caliper body 102. The second seal ring 138 is arranged in the second seal groove 139 and surrounds the other end of the second communication oil line 134.

For example, the first seal ring 136 and the second seal ring 138 are both constructed as a shape of ring. The first seal ring 136 surrounds the other end of the first communication oil line 134 and located in the first seal groove 137, and the second seal ring 138 surrounds the other end of the second communication oil line 135 and located in the second seal groove 139. The first seal ring 136 seals the joint surface between the first caliper body 101 and the second caliper body 102 at a position of the other end of the first communication oil line 134. The second seal ring 138 seals the joint surface between the first caliper body 101 and the second caliper body 102 at a position of the other end of the second communication oil line 135. In addition, the first communication oil line 134 of the first oil line 131 can be in communication with the first communication oil line 134 of the second oil line 132 through a central hole of the first seal ring 136, and the second communication oil line 135 of the first oil line 131 can be in communication with the second communication oil line 135 of the second oil line 132 through the first seal ring 136. The first seal ring 136 and the second seal ring 138 have a good sealing effect.

In some specific embodiments of the present disclosure, as shown in FIG. 3, the exhaust channel 140 is arranged parallel to an axial direction of the piston cylinder 120. In this way, the exhaust channel 140 and the piston cylinder 120 both extend along the thickness direction of the caliper body 100, and the exhaust channel 140 and the piston cylinder 120 are both perpendicular to the joint surface between the first caliper body 101 and the second caliper body 102. Manufacturing is simpler, and exhaustion is facilitated.

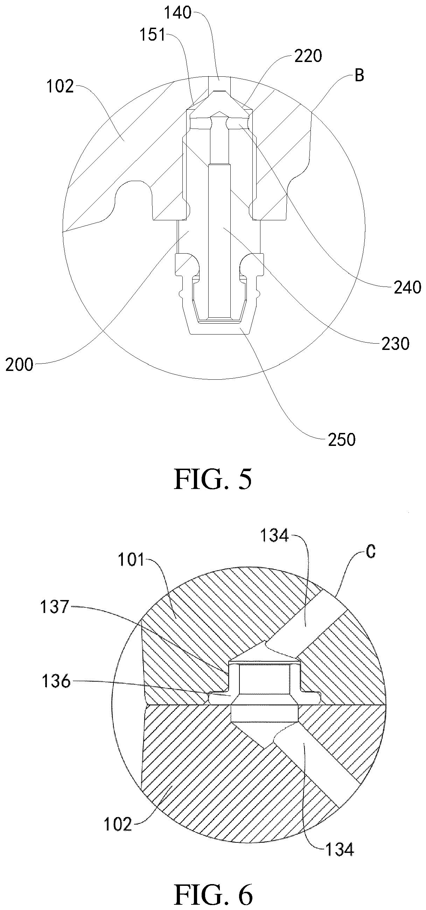

In some specific embodiments of the present disclosure, as shown in FIG. 5, the exhaust screw 200 has a first end and a second end. The first end extends into the exhaust port 150, and the second end is exposed from the exhaust port 150.

A first cone surface 220, a central exhaust hole 230, and a vent hole 240 are constructed on the exhaust screw 200. The first cone surface 220 is formed at the first end of the exhaust screw 200. The central exhaust hole 230 extends along a length direction of the exhaust screw 200 and runs through the second end of the exhaust screw 200. The vent hole 240 is located on a side of the first cone surface 220 towards the second end, and is in communication with an outer peripheral wall of the exhaust screw 200 and the central exhaust hole 230. For example, the vent hole 240 extends in a radial direction of the exhaust screw 200 and may be plural and arranged at intervals along a circumferential direction of the exhaust screw 200. A second cone surface 151 adapted to match the first cone surface 220 is constructed on a bottom wall of the exhaust port 150.

For example, as shown in FIG. 5, an inclined angle of the first cone surface 220 is slightly greater than an inclined angle of the second cone surface 151, and a height of the first cone surface 220 is greater than a height of the second cone surface 151, so that when the exhaust screw 200 is tightened, the first cone surface 220 and the second cone surface 151 can form a good seal effect. When the exhaust screw 200 is loosened, gas can pass through a gap between the first cone surface 220 and the second cone surface 151, and is exhausted from the central exhaust hole 230 through the vent hole 240.

In addition, a seal sleeve 250 may further be arranged on the second end of the exhaust screw 200. The seal sleeve 250 covers the second end of the exhaust screw 200 and seals the central exhaust hole 230, to prevent residual fluid after exhaustion from flowing out from the central exhaust hole 230.

A vehicle according to an embodiment of the present disclosure is described below.

The vehicle according to this embodiment of the present disclosure includes the brake caliper 1 according to the foregoing embodiment of the present disclosure.

The vehicle according to this embodiment of the present disclosure has advantages of good heat dissipation effect, high stability, simple exhaustion operation, high exhaust efficiency, and the like, by using the brake caliper 1 according to the foregoing embodiment of the present disclosure.

Other configurations and operations of the brake caliper 1 and the vehicle according to the embodiments of the present disclosure are known to those of ordinary skill in the art and are not described in detail herein again.

In description of this specification, description of reference terms such as "specific embodiments", or "an example", means specific features, structures, materials, or characteristics described with reference to embodiments or examples are included in at least one embodiment or example of the present disclosure. In this specification, schematic descriptions of the foregoing terms do not necessarily refer to the same embodiment or example.

Although the embodiments of the present disclosure have been shown and described, a person of ordinary skill in the art should understand that various changes, modifications, replacements, and variations may be made to the embodiments without departing from the principles and purposes of the present disclosure, and the scope of the present disclosure is as defined by the appended claims and their equivalents.

## Claims

1. A brake caliper, comprising:
a caliper body, a brake disc groove and a piston cylinder being constructed in the caliper body, a brake-fluid delivery oil line and an exhaust channel being constructed in a wall of the caliper body, the brake-fluid delivery oil line communicating with the piston cylinder, the exhaust channel being in communication with an end of the brake-fluid delivery oil line in a length direction of the caliper body, an exhaust port being provided on a side of the caliper body in a thickness direction, and the exhaust port being in communication with the exhaust channel; and
an exhaust screw, the exhaust screw being mounted on the exhaust port on the side of the caliper body, to control opening and closing of the exhaust port.

2. The brake caliper according to claim 1, wherein the caliper body comprises:
a first caliper body and a second caliper body, wherein the first caliper body and the second caliper body are fastened to jointly define the brake disc groove, the piston cylinder is formed on the first caliper body and the second caliper body, the brake-fluid delivery oil line is formed on the first caliper body and the second caliper body, the exhaust channel and the exhaust port are formed on the second caliper body, and the exhaust screw is mounted on the second caliper body.

3. The brake caliper according to claim 2, wherein the brake-fluid delivery oil line comprises:
a first oil line and a second oil line, the first oil line is formed on the first caliper body, the second oil line is formed on the second caliper body and is in communication with the first oil line, and the exhaust channel is in communication with the second oil line.

4. The brake caliper according to claim 3, wherein the first oil line and the second oil line are symmetrically arranged with respective to a joint surface between the first caliper body and the second caliper body.

5. The brake caliper according to claim 3 or 4, wherein each of the first oil line and the second oil line comprises:
an injection oil line, the injection oil line extends along the length direction of the caliper body and is in communication with a bottom portion of the piston cylinder;
a first communication oil line, the first communication oil line is located on one side of the piston cylinder in the length direction of the caliper body, the first communication oil line is arranged inclined with respective to the injection oil line, one end of the first communication oil line is in communication with the injection oil line, and an other end of the first communication oil line runs through the joint surface between the first caliper body and the second caliper body; and
a second communication oil line, the second communication oil line is located on an other side of the piston cylinder in the length direction of the caliper body, the second communication oil line is arranged inclined with respective to the injection oil line, one end of the second communication oil line is in communication with the injection oil line, and an other end of the second communication oil line runs through the joint surface between the first caliper body and the second caliper body, wherein
the exhaust channel is in communication with the second communication oil line of the second caliper body.

6. The brake caliper according to claim 5, further comprising:
an oil seal plug, two ends of the injection oil line being open, a threaded hole being constructed on the injection oil line, and the oil seal plug being mounted on the threaded hole.

7. The brake caliper according to claim 5 or 6, further comprising:
a first seal ring, a first seal groove being constructed on the joint surface between the first caliper body and the second caliper body, and the first seal ring being arranged in the first seal groove and surrounding the other end of the first communication oil line; and
a second seal ring, a second seal groove being constructed on the joint surface between the first caliper body and the second caliper body, and the second seal ring being arranged in the second seal groove and surrounding the other end of the second communication oil line.

8. The brake caliper according to any one of claims 1 to 7, wherein the exhaust channel is arranged parallel to an axial direction of the piston cylinder.

9. The brake caliper according to any one of claims 1 to 8, wherein the exhaust screw has a first end and a second end, the first end extends into the exhaust port, and the second end is exposed from the exhaust port;
a first cone surface, a central exhaust hole, and a vent hole are constructed on the exhaust screw, the first cone surface is formed at the first end of the exhaust screw, the central exhaust hole extends in a length direction of the exhaust screw and runs through the second end of the exhaust screw, and the vent hole is located on a side of the first cone surface towards the second end, and is in communication with an outer peripheral wall of the exhaust screw and the central exhaust hole; and
a second cone surface adapted to match the first cone surface is constructed on a bottom wall of the exhaust port.

10. A vehicle, comprising the brake caliper according to any one of claims 1 to 9.
